# EUROPEAN PATENT SPECIFICATION

(11) **EP 3 317 521 B1**
(45) Date of publication and mention of the grant of the patent: **29.09.2021**
(21) Application number: 16734182.5
(22) Date of filing: 23.06.2016
(51) Int. Cl.: F03D 7/02

(54) **WIND TURBINE CONTROL OVER-RIDE**
ÜBERSCHREIBUNG DER WINDTURBINENSTEUERUNG
PRISE DE CONTRÔLE DE COMMANDE DE TURBINE ÉOLIENNE

(30) Priority: 30.06.2015 US 201562186950 P; 28.08.2015 DK 201570560
(43) Date of publication of application: 09.05.2018
(73) Proprietor: Vestas Wind Systems A/S, 8200 Aarhus N (DK)
(72) Inventor: BYREDDY, Chakradhar, Spring, Texas 77379 (US); SPRUCE, Chris, Leatherhead Surrey KT23 4PD (GB)
(74) Representative: Vestas Patents Department
(86) International application number: PCT/DK2016/050219
(87) International publication number: WO 2017/000959

(56) References cited:
- WO-A1-2016/023554
- US-A1- 2013 257 051
- US-A1- 2014 248 123
- US-A1- 2014 288 855

## Description

The present invention relates to methods and control systems for over-riding wind turbine over-rating control functions to allow short term power boosts.

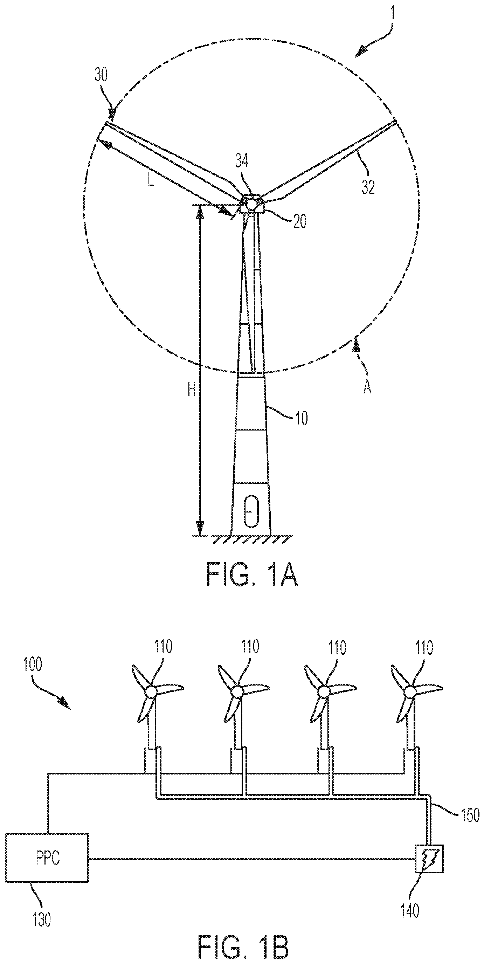

Figure 1A illustrates a large conventional wind turbine 1, as known in the art, comprising a tower 10 and a wind turbine nacelle 20 positioned on top of the tower 10. The wind turbine rotor 30 comprises three wind turbine blades 32 each having a length L. The wind turbine rotor 30 could comprise another number of blades 32, such as one, two, four, five, or more. The blades 32 are mounted on a hub 34 which is located at a height H above the base of the tower. The hub 34 is connected to the nacelle 20 through a low speed shaft (not shown) extending from the front of the nacelle 20. The low speed shaft drives a gearbox (not shown) which steps up the rotational speed and, in turn, drives an electrical generator within the nacelle 20 for converting the energy extracted from the wind by the rotating blades 32 into electrical power output. The wind turbine blades 32 define a swept area A, which is the area of a circle delineated by the rotating blades 32. The swept area dictates how much of a given air mass is intercepted by the wind turbine 1 and, thus, influences the power output of the wind turbine 1 and the forces and bending moments experienced by the components of the turbine 1 during operation. The turbine may stand onshore, as illustrated, or offshore. In the latter case the tower will be connected to a monopile, tripod, lattice or other foundation structure, and the foundation could be either fixed or floating.

Each wind turbine has a wind turbine controller, which may be located at the tower base or tower top, for example. The wind turbine controller processes inputs from sensors and other control systems and generates output signals for actuators such as pitch actuators, generator torque controller, generator contactors, switches for activating shaft brakes, yaw motors etc.

Figure 1B shows, schematically, an example of a conventional wind power plant 100 comprising a plurality of wind turbines 110, the controllers of each of which communicate with a power plant controller PPC 130. The PPC 130 may communicate bi-directionally with each turbine. The turbines output power to a grid connection point 140 as illustrated by the line 150. In operation, and assuming that wind conditions permit, each of the wind turbines 110 will output maximum active power up to their rated power as specified by the manufacturer.

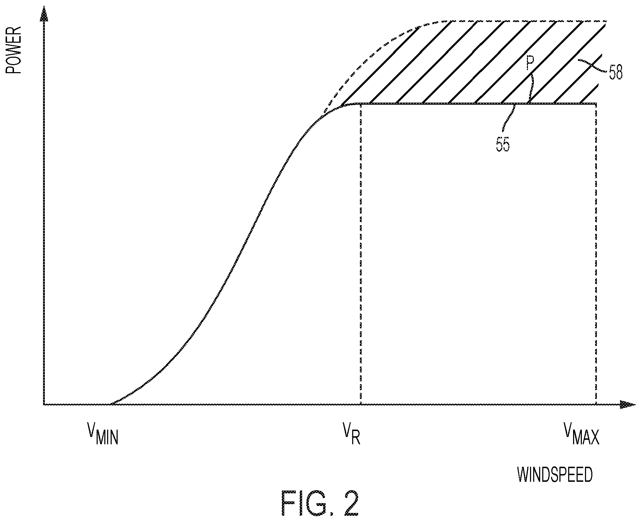

Figure 2 illustrates a conventional power curve 55 of a wind turbine, plotting wind speed on the x axis against power output on the y axis. Curve 55 is the normal power curve for the wind turbine and defines the power output by the wind turbine generator as a function of wind speed. As is well known in the art, the wind turbine starts to generate power at a cut-in wind speed Vₘᵢₙ. The turbine then operates under part load (also known as partial load) conditions until the rated wind speed is reached at point V_{R}. At the rated wind speed the rated, or nominal, generator power is reached and the turbine is operating under full load. The cut-in wind speed in a typical wind turbine may be 3 m/s and the rated wind speed may be 12 m/s, for example. Point Vₘₐₓ is the cut-out wind speed, which is the highest wind speed at which the wind turbine may be operated while delivering power. At wind speeds equal to, and above, the cut-out wind speed the wind turbine is shut down for safety reasons, in particular to reduce the loads acting on the wind turbine. Alternatively the power output may be ramped down as a function of wind-speed to zero power.

The rated power, or name-plate power level, of a wind turbine is defined in IEC 61400 as the maximum continuous electrical power output that a wind turbine is designed to achieve under normal operating and external conditions. Large commercial wind turbines are generally designed for a lifetime of 20 years and are designed to operate at the rated power so that the design loads and fatigue life of components are not exceeded.

The fatigue damage accumulation rates of individual components in wind turbines vary substantially under different operating conditions. The rate of wear, or accumulation of damage, tends to increase as generated power increases. Wind conditions also affect rate of accumulation of damage. For some mechanical components, operation in very high turbulence causes a rate of accumulation of fatigue damage that is many times higher than in normal turbulence. For some electrical components, operation at very high temperatures, which may be caused by high ambient temperatures, causes a rate of accumulation of fatigue damage, such as insulation breakdown rate, that is many times higher than in normal temperatures. As an example, for generator windings, a 10°C decrease in winding temperature may increase lifetime by approximately 100%.

Recently progress has been made in controlling turbines such that they can produce limited additional power at levels greater than the rated power, as indicated by shaded area 58 of Figure 2. The term "over-rating" is understood to mean producing more than the rated active power during full load operation by controlling one or more turbine parameters such as rotor speed, torque or generator current. An increase in speed demand, torque demand and/or generator current demand increases additional power produced by over-rating, whereas a decrease in speed, torque and/or generator current demand decreases additional power produced by over-rating. As will be understood, over-rating applies to active power, and not reactive power. When the turbine is over-rated, the turbine is run more aggressively than normal, and the generator has a power output which is higher than the rated power for a given wind speed. The over-rating power level may be up to 30% above the rated power output, for example. This allows for greater power extraction when this is advantageous to the operator, particularly when external conditions such as wind speed, turbulence and electricity prices would allow more profitable power generation.

Over-rating causes higher wear or fatigue on components of the wind turbine, which may result in early failure of one or more components and require shut down of the turbine for maintenance. As such, over-rating is characterised by a transient behaviour. When a turbine is over-rated it may be for as short as a few seconds, or for an extended period of time if the wind conditions and the fatigue life of the components are favourable to over-rating.

Patent applications EP2416007 and US2014/288855 describe a power management system for wind plants in which a boost mode can be activated on individual wind turbines. The boost mode increases power output so that the power plant can meet its target or desired output. The present invention aims to provide an improved method, and corresponding controller, for protecting against premature ageing and fatigue-damage accumulation when over-rating a turbine, and yet also allowing a target power plant or turbine power output to be met.

### SUMMARY OF THE INVENTION

The invention is defined in the independent claims to which reference is now directed. Preferred features are set out in the dependent claims.

According to a first aspect of the invention a method of controlling a wind turbine Z according to claim 1 is provided. The method comprises over-rating the wind turbine above the wind turbine's rated power in response to a control signal and applying an over-rating control algorithm that restricts the amount of additional power produced by over-rating the wind turbine, due to the control signal, based upon one or more turbine parameters. An over-ride signal is received and in response to the over-ride signal, the over-rating control algorithm is over-ridden to temporarily increase the amount of power output by the wind turbine for a period of time.

Forecasting of wind energy output, and the certainty of wind power output to the grid, is becoming increasingly important to grid operators. Embodiments of the invention are particularly applicable to situations in which a wind power plant operator has guaranteed a certain amount of power over a particular period of time. If an operator has predicted a particular output, and then either the wind forecast is significantly incorrect such that the wind-speed is outside the nominal power region, or one or more turbines shut down unexpectedly with a fault and cannot be re-started, then the operator will not produce enough power over the period of time. Under these circumstances, an over-ride function for over-riding over-rating control algorithms, to force increased power from the remaining turbines, allows the power plant to be temporarily forced to produce sufficient power to meet its target. Advantageously, embodiments can be implemented with software changes to the wind turbine and/or wind power plant control systems, requiring little or no new hardware. Such an over-ride functionality allows for a short term increase in power output to be achieved whilst over-rating the turbine. This is particularly advantageous because the over-rating control algorithm may be configured to limit fatigue damage incurred by the turbine or turbine components, and allows the turbine controller to trade off short term fatigue damage against short term power output. The over-ride signal could be activated as desired by a controller in order to extract additional power from the power plant.

The one or more turbine parameters are optionally parameters indicative of the fatigue life consumed by the one or more turbine components. The one or more turbine parameters may be lifetime usage estimators. The over-rating control algorithm can determine whether the fatigue life consumed by the one or more turbine components exceeds respective threshold values and, if so, reduces the power output of the wind turbine to limit the rate of consumption of fatigue life by the one or more turbine components.

Optionally, after the period of time during which the over-rating control algorithm has been over-ridden, the method may further comprise: determining measures of the fatigue life consumed by one or more turbine components; determining whether the fatigue life consumed by the one or more components exceeds respective threshold values and, if so, controlling the power output of the wind turbine to limit the total fatigue life consumed by the one or more turbine components.

Determining measures of the fatigue life consumed by one or more turbine components may comprise: obtaining one or more signals, or values of variables, that indicate the fatigue lifetime of one or more of the wind turbine's components from turbine sensors; and applying a lifetime usage estimator algorithm to the signals or values to determine measures of the fatigue life consumed by each of the turbine components.

Controlling the power output of the wind turbine to limit the total fatigue life consumed by the one or more turbine components may, in particular, comprise: reducing or cancelling over-rating for a period of time to reduce the rate of consumption of fatigue life of the one or more components. Alternatively, controlling the power output of the wind turbine to limit the total fatigue life consumed by the one or more turbine components may comprise: de-rating the turbine to produce power below rated power for a period of time to reduce the rate of consumption of fatigue life of the one or more components. In either case, the method may further comprise reducing the rate of consumption of fatigue life until the value for the total fatigue life consumed by at least one of the one or more of the components passes a respective threshold derived from a long-term expected trend of fatigue damage accumulation.

Optionally, the method may further comprise: receiving a value for a minimum power output for the wind turbine or a wind turbine power plant for a power output period; periodically monitoring the wind turbine or wind turbine power plant power output; determining when the power output falls below the value for minimum power output; and generating the over-ride signal when the power output falls below the value for minimum power output. The power output period may be, for example, periods of half an hour.

Optionally, the method may further comprise the application of one or more operational constraints by: monitoring one or more turbine component parameters; and cancelling the over-rating control algorithm if one or more of the turbine component parameters move beyond respective threshold values related to respective values. This can be used to provide additional protection to prevent damage to the turbine. In particular, the method may further include shutting down the turbine if one or more of the turbine component parameters reach their respective values.

The period of time over which the amount of power output by the wind turbine is increased may be between 1 minute and 48 hours. In particular, the period of time may be half an hour, or around half an hour.

One of the turbine parameters is a turbine maximum power level. The turbine maximum power level is a first maximum power level, wherein the over-rating control algorithm constrains power output to a value at or below the first maximum power level; and over-riding the over-rating control algorithm includes applying a second maximum power level, that is greater than the first maximum power level, to which the turbine is then over-rated. The first maximum power level is the maximum power level for the individual turbine at the turbine micro-site. The second maximum power level is the maximum power level for the given turbine type constrained by the ultimate load limits of the wind turbine mechanical components, and the design limits of the electrical components.

According do a second aspect of the invention a controller for a wind turbine according to claim 12 is provided,
the controller being configured to: over-rate the wind turbine above the wind turbine's rated power in response to a control signal; apply an over-rating control algorithm that reduces the additional power produced by over-rating the wind turbine, due to the control signal, based upon one or more turbine parameters; and in response to receiving an over-ride signal, over-riding the over-rating control algorithm to temporarily increase the amount of power output by the wind turbine for a period of time.

A wind turbine or wind power plant comprising a controller according to the second aspect is also provided.

According to a third aspect of the invention a method of controlling a wind turbine, or wind power plant, is provided, the method comprising: receiving a value for a minimum power output for a wind turbine or wind turbine power plant for a power output period; periodically monitoring the wind turbine or wind turbine power plant power output; determining when the power output falls below the value for minimum power output and generating an over-ride signal in response; and sending the over-ride signal to one or more wind turbines, whereby, in response to the over-ride signal, the one or more wind turbines over-ride an over-rating control algorithm to temporarily increase the amount of power output that they output for a period of time.

The method of may particularly be used to send the over-ride signal to a wind turbine controller according to the second aspect of the invention.

According to a fourth aspect of the invention a controller for controlling a wind turbine, or wind power plant, is provided, the controller being configured to: receive a value for a minimum power output for a wind turbine or wind turbine power plant for a power output period; periodically monitor the wind turbine or wind turbine power plant power output; determine when the power output falls below the value for minimum power output and generating an over-ride signal in response; and send the over-ride signal to one or more wind turbines, whereby, in response to the over-ride signal, the one or more wind turbines over-ride an over-rating control algorithm to temporarily increase the amount of power output that they output for a period of time.

### BRIEF DESCRIPTION OF THE DRAWINGS

The invention will now be further described by way of example only and with reference to the accompanying figures in which:
Figure 1A is a schematic front view of a conventional wind turbine;
Figure 1B is a schematic representation of a conventional wind power plant comprising a plurality of wind turbines;
Figure 2 is a graph illustrating a conventional power curve of a wind turbine;
Figure 3 is a schematic representation of a wind power plant having an over-rating optimiser for controlling individual turbine over-rating;
Figure 4 is a graph illustrating rate of accumulation of turbine gearbox teeth fatigue damage incurred as a function of average wind speed for an example turbine;
Figure 5A is a graph illustrating rate of accumulation of general turbine structural fatigue damage incurred as a function of average wind speed;
Figure 5B is a further graph illustrating rate of accumulation of general turbine structural fatigue damage incurred as a function of average wind speed;
Figure 6 is a series of graphs illustrating normalised rate of accumulation of fatigue damage for turbine components as a function of average wind speed for various turbulence intensities;
Figure 7 is a graph illustrating an over-ride period and a following period of reduced fatigue damage in relation to a model of accumulation of fatigue damage over time;
Figure 8 is an example of a method according to an embodiment of the invention;
Figure 9 illustrates a turbine optimiser; and
Figure 10 is an example of a method for setting a wind turbine maximum power level.

### DETAILED DESCRIPTION OF PREFERRED EMBODIMENTS

Embodiments of the invention relate to wind turbines, or to wind power plants, that are operated by performing over-rating. In general, an over-rating signal is generated, either at the power plant level, the individual turbine level, or elsewhere such as at a remotely located control station. The over-rating signal may then be acted upon at the power plant level, or by individual turbines, to achieve over-rating and therefore an increase in power output from individual turbines. The turbines may respond to the over-rating signal on an individual basis, depending upon the amount of fatigue life used by their various components, and/or the maximum power level, above rated power, that is applicable to the particular turbine and is set to prevent the exceedance of component design loads.

The specific manner in which over-rating control signals are generated is not crucial to embodiments of the present invention, but an example will be given for ease of understanding.

Each wind turbine may include an over-rating controller, as part of the wind turbine controller. The over-rating controller calculates an over-rating request signal indicating an amount up to which the turbine is to over-rate the power output above rated output. The controller receives data from the turbine sensors, such as pitch angle, rotor speed, power output etc and can send commands, such as set points for pitch angle, rotor speed, power output etc. The controller may also receive commands from the grid, for example from the grid operator to boost or reduce active or reactive power output in response to demand or a fault on the grid.

As an alternative, the over-rating controller may be part of the PPC 130 of Figure 1B for example. The PPC communicates with each of the turbines and can receive data from the turbines, such as pitch angle, rotor speed, power output etc and can send commands to individual turbines, such as set points for pitch angle, rotor speed, power output etc. The PPC 130 also receives commands from the grid, for example from the grid operator to boost or reduce active or reactive power output in response to demand or a fault on the grid. Each wind turbine's controller communicates with the PPC 130.

The PPC 130 receives power output data from each of the turbines and is therefore aware of the active and reactive power output by each turbine and by the plant as a whole at the grid connection point 140. If required, the PPC 130 can receive an operating set point for the power plant as a whole and divide this among each of the turbines so that the output does not exceed the operator assigned set point. This power plant set point for active power may be anywhere from 0 up to the rated power output for the plant. The "rated power" output for the plant is the sum of the rated active power output of the individual turbines in the plant. For active power, the power plant set point may be above the rated power output of the plant, i.e. the whole plant is over-rated.

The PPC may receive an input directly from the grid connection, or it may receive a signal that is a measure of the difference between the total power plant output and the nominal or rated power plant output. This difference can be used to provide the basis for over-rating by individual turbines. Alternatively, the over-rating control signal may be generated depending upon the output of one or more sensors that detect operating parameters of the turbine, or turbines, or local conditions such as wind speed and direction. In any case, there is a desire for an increase in the amount of power produced by the wind power plant, or individual wind turbines, and so an over-rating signal is issued.

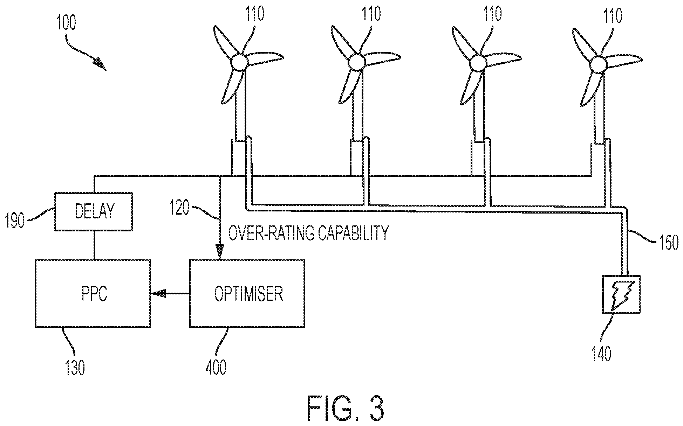

Whilst the same over-rating set point signal may be sent to each turbine, using the total power plant output to provide a control input, it is also possible for each turbine to be provided with its own over-rating set point. Figure 3 shows an arrangement with a central optimiser 400 which provides an input into the PPC 130. The central optimiser 400 receives an input 120 from each turbine which indicates the over-rating capability of that turbine. That input may depend on a variety of factors such as the local wind conditions, the present cost of electricity generated and possibly also the age or fatigue damage of the turbine, and will be provided by the individual turbine controllers. The central optimiser 400 calculates an over-rating value for each turbine and communicates that value to each turbine based on the present over-rating capability of the turbine. Of course the PPC 130 may take other factors into account, such as the need to ensure that the total power output does not exceed the rated output for the power plant. The optimiser 110 may be implemented using the same computer system as the PPC 130, and may be implemented as software within the same control system as the PPC.

In theory, only a single turbine may be over-rated, but it is preferred to over-rate a plurality of the turbines, and most preferred to send an over-rating signal to, or generate an over-rating control signal at, all the turbines. The over-rating signal sent from the over-rating controller to each turbine may not be a fixed control, but may instead be an indication of a maximum amount of over-rating that each turbine may perform.

An over-rating signal is therefore generated, either centrally or at each individual turbine in a standalone manner. The signal may be indicative of the amount of over-rating that may be performed by each turbine individually, or the turbines of the power plant as a whole. This may be applied whenever greater power extraction is required by the operator, particularly when external conditions such as wind speed, turbulence and electricity prices would allow more profitable power generation.

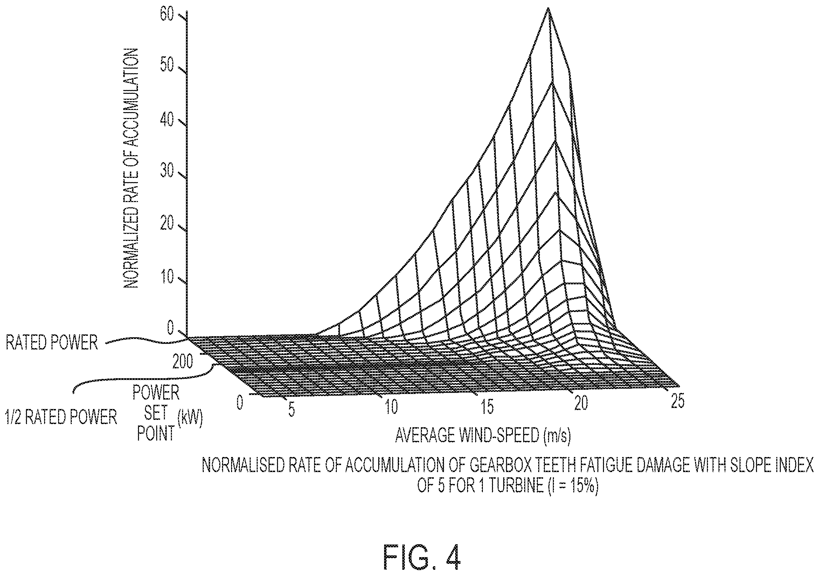

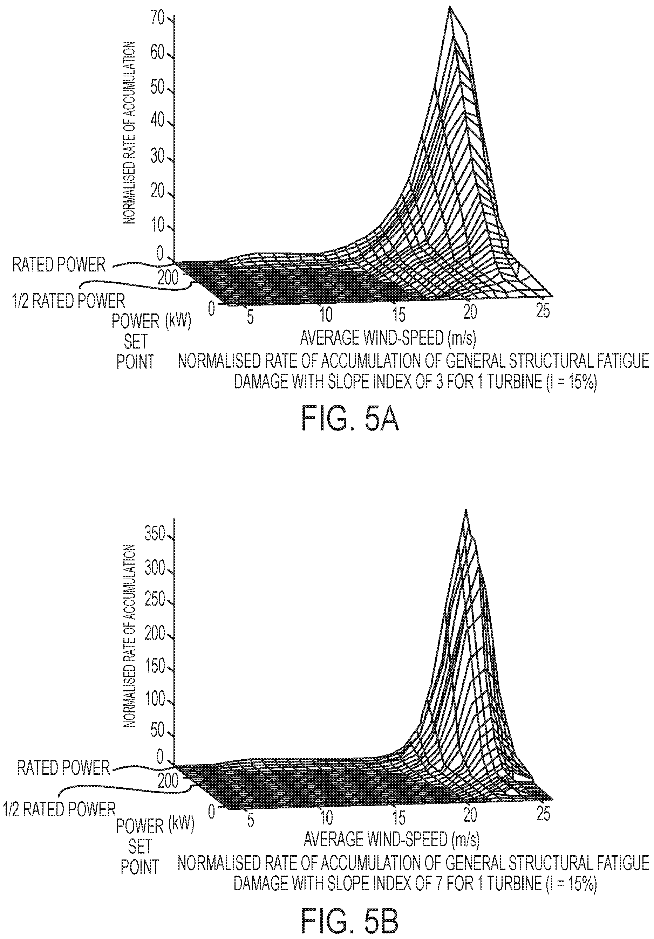

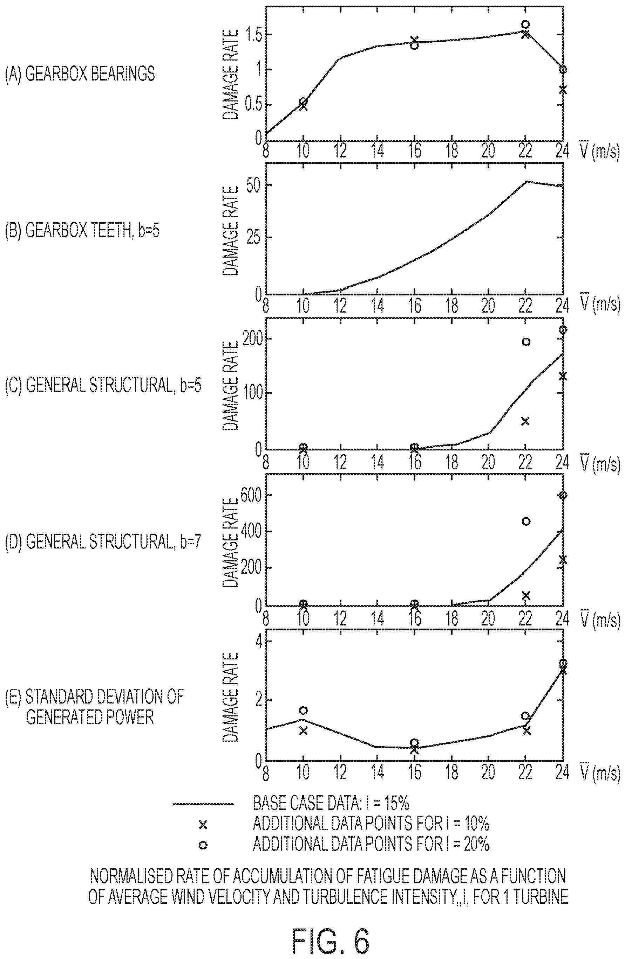

Figures 4, 5A, 5B and 6 show examples of the rate of accumulation of damage within wind turbine components as a function of average wind speed. Figure 4 shows the rate of accumulation of gearbox teeth fatigue damage for varying average wind speeds and for different power set points for the turbine. Figures 5A and 5B show the same variables for general structural fatigue damage for different slope indexes. A slope index refers to the slope of the linear part of the S-N curve, plotted with the magnitude of cyclic stress on a linear scale versus number of cycles to failure on a log scale, and depends on the material of the component. As can be seen, rate of accumulation of fatigue damage increases non-linearly with power demand for many loads. Figure 6 shows how damage rates for components may vary depending upon different turbulence intensity values, for operation at nominal power. Figure 6 also shows how rate of accumulation of fatigue damage increases non-linearly with turbulence intensity for almost all loads. Figures 4, 5A and 5B only show changes up to rated power, they do not include the over-rated region. For the avoidance of doubt, curves showing changes above rated power would indicate further increases to accumulation of damage when the turbine is operating in the above-rated region.

Over-Rating Control (ORC) is a control function that mitigates for fatigue damage caused by over-rating, and enables a wind turbine to increase Annual Energy Production (AEP) by allowing it to operate above its rated power only when it is practical and safe to do so. Automatic "operational constraints" may be implemented in the turbine controller to monitor key operating conditions, such as component temperatures and grid conditions, and moderate the amount of over-rating to maintain operation within the turbine's design envelope.

The design envelope consists of the range of operating parameters within which the turbine is designed to operate (operational design envelope) or survive (survival design envelope). For example, the operational design envelope for the operating parameter gearbox oil temperature may be 10 deg C to 65 deg C, that is, if the gearbox oil temperature moves outside this range then the turbine will be outside its operational design envelope. In this case, the turbine is protected by alarms (referred to in IEC 61400-1 as 'protection functions') and will shut down if the gearbox oil temperature moves outside this range. As well as being defined by real-time operating limits, such as temperatures and electrical current limitations, the operational design envelope may also, or alternatively, be defined by the loads, including fatigue-loads, used to design the mechanical components and parts of the electrical components; i.e. the "design loads". Over-rating exploits the gap that typically exists between the component design-loads and the loads experienced by each turbine in operation, which is typically more benign than the IEC-standard simulated conditions for which the design-loads were calculated. Over-rating causes the power demand for the turbine to be increased in high winds until either an operating limit specified by an operational constraint (temperature, etc.) is reached, or until an upper power limit is reached that has been set to prevent the exceedance of component design loads.

Operational constraints limit the possible over-rating set point signal or power demand as a function of various operating parameters. For example, where a protection function is in place to initiate shut down when the gearbox oil temperature exceeds 65°C as mentioned above, an operational constraint may dictate a linear decrease in the maximum possible over-rating set point signal as a function of gearbox oil temperature for temperatures over 60°C, reaching "no over-rating possible" (i.e., a power set-point signal equal to rated power) at 65°C.

To implement ORC each turbine may have a corresponding over-rating controller. The over-rating controller determines whether the turbine can respond to the over-rating signal and, if so, by what amount. Each turbine can respond individually to the over-rating signal in accordance with its over-rating controller. For example, where the controller determines that conditions at a given turbine are favourable and above rated wind speed it may respond positively and the given turbine is over-rated. As the controllers implement the over-rating signal, the output of the power plant will rise. The over-rating controller is described in more detail below.

The extent to which over-rating is used over the lifetime of an individual turbine may be controlled by each turbine responding to a common or individual over-rating signal or set point in a way that best suits itself, according to ORC. Thus, when the over-rating demand is received at the controller of each turbine from the PPC 130, each turbine processes and responds to this signal taking fatigue into account. ORC either allows over-rating at the requested amount according to the over-rating signal or set point, or reduces the amount of over-rating applied. A turbine may not over-rate at all, or may not over-rate at the level requested, if the effect on the fatigue lifetime of critical components is too great. Examples of critical components include the rotor blades, blade pitch systems, main bearing, gearbox, generator, converter, transformer, yaw system, tower and foundations. This will depend on the conditions at the turbine as well as the lifetime history of the turbine. For example, a turbine that is near the end of its life expectancy may be highly fatigued and so not suited to run at the over-rating level demanded. If the power plant output is insufficient, as some or all of the turbines are operating under the demanded over-rating level for fatigue saving, the over-rating demand will keep rising until it reaches its set-point or saturates.

It should be noted that the calculation or assessment of the extent to which over-rating is used over the lifetime of an individual turbine may be made either at the individual turbine control units as described above, as part of their central processes, or may be made elsewhere. For example, the calculation could be performed at the PPC 130, or at a separate optimiser 400, which may perform the calculation individually for multiple turbines based on data received from those turbines.

To ensure the fatigue load limits of all components remain within their design lifetimes, the loads it experiences (be they bending moments, temperatures, forces or motions for example) may be measured and the amount of component fatigue life consumed calculated. This may be performed, for example, using a well known technique such as a rainflow count and Miner's rule or a chemical decay equation. The individual turbines can then be operated, as part of the ORC functionality, in such a way as to not exceed the design limits.

A device for the measuring of the fatigue life consumed for a given component is referred to as its Lifetime Usage Estimator (LUE). The LUE can inform the turbine over-rating controller whether the total fatigue experienced at a given point in time is below or above the level the turbine is designed to withstand, and the controller can decide to over-rate, and by what amount, when the damage is below the expected level. The LUEs can also, or alternatively, be used to measure the rate of accumulation of fatigue, as opposed to an absolute level. If the fatigue lives of the components are being consumed too quickly, over-rating of the turbine can be cancelled or reduced even if its current fatigue life is less than expected at that time. The rate of usage of fatigue life may then be one input to the over-rating controller and assist in the decision whether or not to over-rate. LUEs are described in more detail below.

Forecasting of wind energy output, and the certainty of wind power output to the grid, is important to grid operators, particularly for the 0.5-24 hour forecasts which are most relevant to grid operators. When operating a wind turbine or wind power plant the operator may guarantee given levels of power for the coming periods of time. For example, the operator may have guaranteed, from a particular time, 102MW for the first half-hour, 96MW for the second half-hour, 93 MW for the third half-hour, and so on. If an operator has predicted a given output in a given time period, for example an average of 164MW in time period 4-4.5 hours hence, and then during that time period an unexpected event occurs that decreases power production, then the operator will not produce enough power according to his contractual obligation. Such unexpected events may include the wind forecast being significantly incorrect such that the wind-speed is outside the nominal power region, or one or more turbines shutting down unexpectedly with a fault and cannot be re-started.

To mitigate for such unexpected events, a control function is provided that implements an over-ride function for the over-rating control, ORC. The control function forces increased power from any remaining turbines that are not already running at their maximum permitted over-rated power level, allowing the power plant to be temporarily forced to produce sufficient power to meet the required output. The over-ride control function may be implemented in the individual wind turbine controllers, and may be implemented specifically in an over-rating controller. The over-ride control function could also be implemented at the PPC, or at a remotely located control station as appropriate.

By over-riding the ORC functionality, any reduction in power output below the maximum permitted by the ORC control at individual wind turbines may be cancelled. This increases the power output by individual turbines, and therefore by the power plant as a whole. The maximum power level may optionally also be increased so that each turbine is over-rated further, to produce power at the maximum level allowed by the turbine design, at the highest power level that can be applied without causing extreme or ultimate design load limits to be exceeded. An example method for calculating the maximum power level is provided below.

Only a portion of the ORC functionality may be over-ridden. In particular, the over-ridden functionality may include only control based on measuring of the fatigue life consumed for a given component, which ensures the fatigue load limits of all components remain within their design lifetimes. Alternatively, or additionally, control functions that limit the over-rating based upon a particular maximum power level may be over-ridden where a higher maximum power level may be used, as described herein.

Operational constraints may continue to be implemented and used to moderate the amount of over-rating. In particular, the operational constraints may be used to cancel the over-ride if key turbine operating conditions, such as component temperatures, currents, stains or stresses, reach predetermined values related to critical design values.

During normal operation the over-ride is applied for a given period of time before it is cancelled, either because the necessary additional amount of power has been generated to meet the power output needs for the duration for which it was required, or because an operational constraint has cancelled the over-ride. After the over-ride period, during which the wind turbines have been over-rated beyond the normal fatigue load protection afforded by ORC, action may be taken to offset the additional fatigue damage incurred during this period.

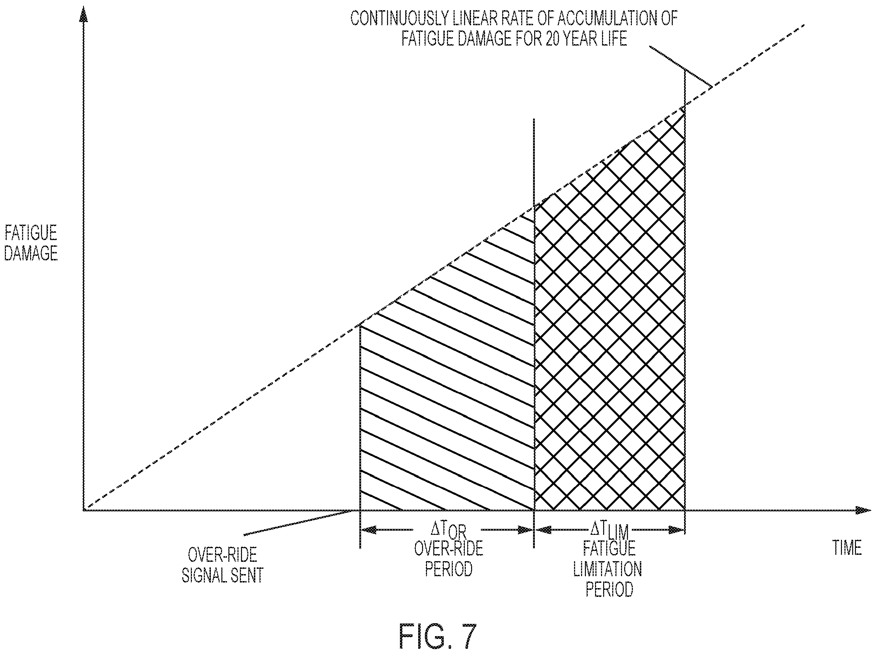

Figure 7 shows a graph of incurred fatigue damage against time for a given turbine component. The dashed line represents a portion of a linear function for expected fatigue damage accumulated over an expected 20 year operating life of a wind turbine. The over-ride period ΔT_{OR} is initiated based upon the over-ride control signal. After the over-ride period a fatigue limitation period ΔT_{Lim} is initiated, during which the turbine is operated at reduced over-rating, or is de-rated, to cause the rate of accumulation of fatigue damage to decrease such that after the fatigue limitation period ends the fatigue levels of the turbine components meet, or fall below, the fatigue levels according to the model of expected fatigue damage over the turbine's operational life.

The fatigue limitation period, ΔT_{Lim}, may be initiated immediately after the over-ride period finishes, or may be initiated at some time subsequent to this.

Optionally, LUEs are operated to determine how much additional fatigue damage is experienced during the forced over-rating period caused by the over-ride. The turbine controller then reduces the amount of, or completely cancels, any over-rating for a period accordingly in the future, to allow the turbine to return to its correct long-term trend accumulation of component fatigue damage. Alternatively, de-rating could be scheduled after the over-ride period to allow the turbine to return to its correct long-term trend accumulation of fatigue damage.

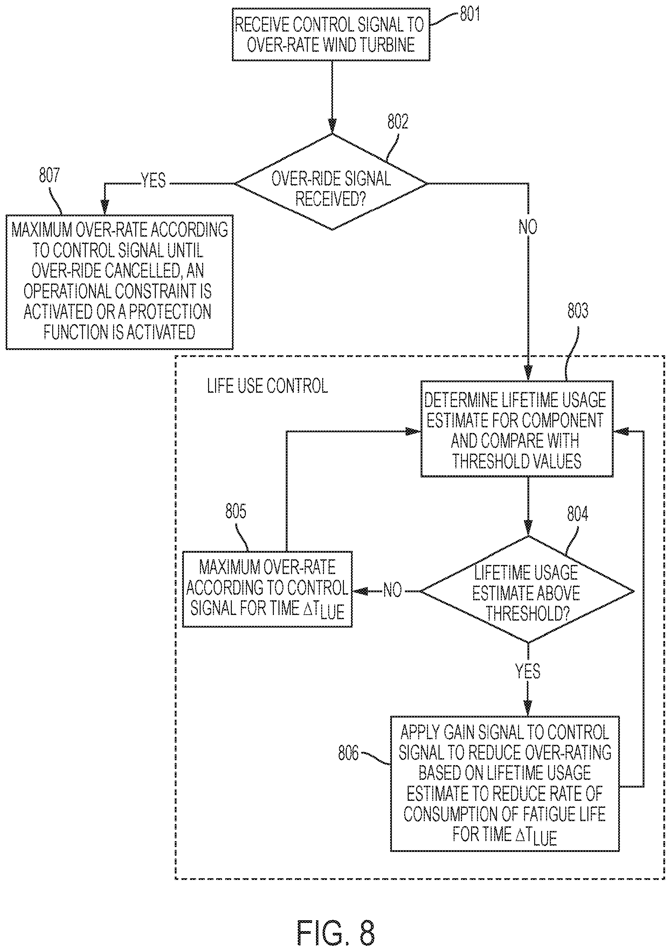

An example of a method for implementing the over-ride of over-rating control is shown in Figure 8. At step 801 a control signal is received to over-rate a wind turbine. As described above, this control signal may provide a value indicative of the amount of over-rating that is to be applied, up to a maximum value, or it may simply indicate that maximum possible over-rating should be applied by the turbine based upon its maximum power level for the turbine type.

Step 802 is a decision block. If no over-ride signal is received, then the method proceeds as normal by determining how the individual turbine is to respond to the over-rating signal. This is achieved using a closed-loop over-rating control method.

At step 803, a determination is made of the lifetime usage estimate for one or more components. This may be done using LUEs which are described below in further detail. The lifetime usage estimates for each component are compared against threshold values determined in accordance with an expected function for damage accumulation, and may also take into account design tolerances. The threshold values may, for example, be determined based upon the linear expected function shown in Figure 7, or any other function used to predict fatigue damage to a given component incurred over the lifetime of the turbine. As such, the threshold values for fatigue damage vary over time.

If it is determined, at step 804, that one or more of the LUEs are below the threshold determined based upon expected damage accumulation then step 805 is applied, that is, the maximum over-rating according to the control signal may be applied, at least for the next sampling period ΔT_{LUE} until the LUEs are determined again and compared with revised threshold values. Steps 803, 804 and 805 may therefore be repeated intermittently or periodically. Alternatively the process could be continuous.

If it is determined, at step 804, that one or more of the LUEs are above their respective thresholds for acceptable fatigue lifetime usage then step 806 is applied and the over-rating applied by the controller to the turbine is reduced. The amount of reduction in over-rating may be based on, and proportional to, the LUEs for the components, and particularly by how much the thresholds are exceeded.

The reduction in over-rating in step 806 may be achieved by applying a gain signal to the over-rating control signal, the gain signal reducing the effective value of the control signal such that the amount of over-rating applied by the turbine controller in response to the control signal is reduced. As with step 805, the reduction in over-rating may be applied, at least for the next sampling period ΔT_{LUE}, until the LUEs are determined again and compared with revised threshold values. Steps 803, 804 and 806 may therefore be repeated intermittently or periodically. Alternatively the process could be continuous.

If, at decision block 802, an over-ride signal is received, the processing according to steps 803 to 806 is stopped or over-ridden, and the maximum over-rating permitted by the control signal is applied to the wind turbine. This maximum over-rating may be applied for a predetermined period of time. This period may be between 1 minute and 48 hours, between 1 minute and 12 hours, or between 1 minute and 12 hours, and may correspond to a weather forecasting window, e.g. 30 minutes or thereabouts. Alternatively, or in addition, the maximum over-rating may be cancelled when the over-ride signal is cancelled, or a corresponding cancellation signal is received.

Additionally, operational constraints as described herein could also be used to cancel the maximum over-rating to the maximum turbine type power level, as indicated herein. Operational constraints may be implemented to prevent turbines from shutting down unnecessarily. When certain measured or estimated values within the wind turbine reach a critical value, the turbine may shut down or enter a safe (reduced power) mode to prevent damage from occurring. In the example given above, where gear box oil temperature is monitored, with an alarm or shut-down being triggered when the temperature reaches a particular value, such as 65°, an operational constraint may be implemented to cancel the over-rating over-ride signal when the temperature reaches a particular value, close to but lower than the shut-down temperature. For example, the operational constraint may cancel over-rating over-ride if the gear box oil temperature reaches 62°. Of course, this functionality could equally be applied with other parameters such as generator winding temperatures, blade loads, or any other parameters that are affected by over-rating and may cause the turbine to shut down or otherwise enter the safe operating mode.

Other selected control functions that affect power demand (e.g. curtailment) or shutdown may also cancel maximum over-rating as required.

It should be noted that LUEs may be determined for different components separately, and that subsequent control to reduce rate of consumption of fatigue life may be performed if only one component exceeds its lifetime usage estimate threshold. In the event that a threshold is exceeded, the turbine is controlled to reduce rate of consumption of fatigue life at step 806 as described above. Control may also be based upon the most fatigued component, if more than one exceeds their respective thresholds.

The steps described in Figure 8 may be performed locally in the wind turbine controller, centrally at the PPC or an optimiser, or remotely via a communications network. It is also possible for the various steps to be performed in a distributed manner.

The over-ride signal may be generated in a number of ways. As a first example, the wind power plant operator could program the contracted or target minimum power output into the power plant controller for a coming predetermined period. For example, the predetermined period could be a 24 hour rolling window ahead in time, optionally with a particular resolution such as 30 minutes. The power plant controller would then monitor the wind power plant's active power output, preferably by monitoring at the point of common coupling (PCC) to the grid. If the output fell below the target value, the over-ride signal would be generated automatically to boost the power output to maintain the output in accordance with the contracted or target minimum. The contracted or target minimum power output could be programmed into the power plant controller locally, or into a central control computer, which would then send the contracted or target schedule to the power plant controller.

As a second example, the over-ride signal could be controlled by the grid operator, and the over-ride signal could come directly from the grid operator. The operator could have the manual option of requesting a 'boost' from one or more wind power plants, by providing appropriate input, which, if the wind was in the above-rated region, would give higher output. This process could be triggered automatically as well as manually.

The over-ride signal may be generated in response to unexpected conditions or an unexpected event, such as one or more of a variation in wind speed or one or more turbines in the power plant shutting down. The control system implementing the method may detect the unexpected conditions or event based upon sensor or data input, for example data may be received which indicates whether one or more turbines are shut down. Where the over-ride signal is manually controlled, rather than computer controlled, the over-ride signal may be provided as an input to the power plant controller or optimiser, or individually to each wind turbine, from a control terminal via a user input device.

### - TURBINE OPTIMISER EXAMPLE

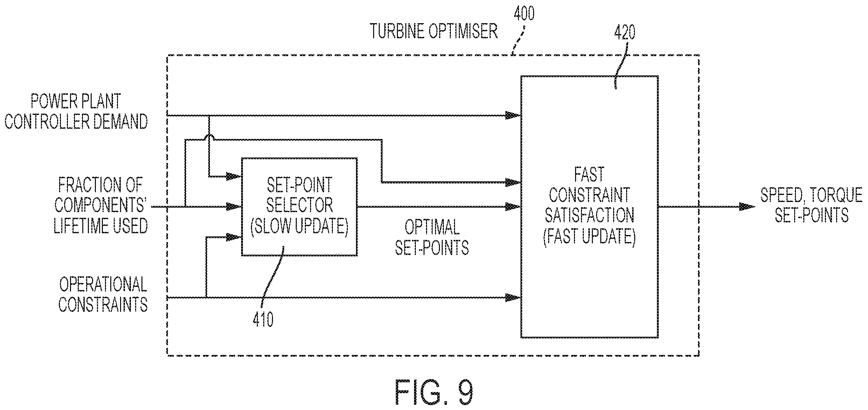

Figure 9 shows an example of a wind turbine optimiser that can be used to implement ORC, and may be used in conjunction with any of the embodiments of the invention described herein. The turbine optimiser operates the turbine at a power level that does not exceed that sent by the PPC and outputs the optimal level of torque and speed based on information from the lifetime usage estimator and the PCC. As can be seen from Figure 9, the turbine optimiser 400 includes a set-point selector 410 and a fast constraint satisfaction unit 420. The set-point selector receives as its inputs the PPC over-rating demand, the lifetime usage data for the major components as described above and optionally also operational constraints from an operational constraint control function (OCC).

OCCs may be used in order to implement the operational constraints described above, preventing component properties from exceeding particular constraint limits beyond which alarms may occur to protect the turbine. OCCs may include constraints placed on the turbine operation based upon values of measurable signals, for example temperature or electrical current. Operational constraint control functions define how the turbine's behaviour should be restricted in order to prevent the measured signals from exceeding these operational constraints or triggering alarms which may result in turbine shutdown.

In the example of Figure 9 the input is the absolute value of lifetime usage rather than the rate of usage. The set-point selector outputs optimal set-points to the fast constraint satisfactions unit periodically, for example between every minute and every few minutes. The fast constraint satisfaction unit 420 also receives as inputs the PCC demand signal, the lifetime usage data and the operating constraints and outputs speed and torque set points periodically. In the example shown, set-points are output at the frequency of demand signals received from the PPC. Of the components for which lifetime usage is determined, each will be classified as speed sensitive if the damage accumulated correlates with speed over-rating percentage only and torque sensitive if the damage accumulated correlates with the torque over-rating percentage only. Components may be generic if they are sensitive to both torque and speed. As mentioned, the set point selector 410 chooses the optimal speed and torque set-points. This is done on a slow time scale Tₛ which is in the order of minutes. The Set-Point Selector update rate Tₛ, is chosen to maximise performance whilst ensuring the over-rating controller does not interfere with existing controllers in the turbine software.

The set-point selector 410 receives the lifetime usage estimates for all estimated components and selects the value corresponding to the most damaged component; that with the greatest used life. If that component has consumed more of its fatigue life than it has been designed to have used at that point in time the set-point selector outputs optimal speed and power set-points equal to their respective rated values. Thus, in that circumstance there is no over-rating.

If any of the speed sensitive components have used more of their fatigue lives than their design value at that point in time, the set-point selector outputs an optimal speed set-point equal to rated speed and if any of the torque sensitive components have used more of their fatigue lives than their design value at that point in time, the set-point selector outputs an optimal torque set-point equal to rated torque. The set-point selector chooses an optimal set-point to maximise the power produced subject to constraints from the PPC and operational constraint controllers sampled at the beginning of the time-step. The set-point selector also attempts to equalize the damage to the most damaged speed and torque sensitive components.

The fast constraint satisfaction unit 420 in this example operates at a higher frequency than the set-point selector and applies saturations to the optimal speed and torque set-points, limiting the outputs to the limits provided by the OCCs and PPC. The fast constraint satisfaction block 420 does not allow the optimiser to send set points over-rated by speed / torque if any of the speed / torque sensitive components have consumed more than their target life. Similarly, the optimiser will not send an over-rated power set-point if any of the generic components have consumed more than their target life.

Embodiments of the invention may include a further functional control unit external to or within the turbine optimiser, which acts to bypass the turbine optimiser, so that maximum over-rating is applied during bypass. The maximum power level to which the turbine is over-rated may be adjusted in the manner described herein during over-ride. In addition, when fatigue life is subsequently offset against the fatigue life incurred during maximum over-rating, the functional unit may operate to further reduce rate of increase of LUE values to ensure that fatigue usage levels in components are able to recover over subsequent period ΔT_{LIM}.

Generally the embodiments described contemplate over-rating based on torque and speed. Over-rating may also be used in constant speed turbines, for example constant speed active stall turbines, with bypass/over-ride applied to the over-rating control function. In this case, only the torque is over-rated and each turbine in the power plant, or each turbine in a subset of the power plant, sends an over-rating demand to the PPC which monitors the total power output and reduces the amount of over-rating if the total output is above the rated output of the power plant. In practice, this is likely to be rarely necessary as, dependent on weather conditions, not all turbines will be over-rating and some may not be generating any power, for example if they are shut down for maintenance. Alternatively, a power regulation model uses a control loop which compares wind speed input data from each turbine to known power curves to predict how much power each turbine can produce at any given time. The PRM sends individual power demands to each turbine with the objective to obtain as close to power plant rated power as possible. The PRM may be used with an extended power curve for an over-rated turbine. Therefore, embodiments of the invention may be applied to both constant-speed and variable-speed turbines. The turbine may employ active pitch control, whereby power limitation above rated wind speed is achieved by feathering, which involves rotating all or part of each blade to reduce the angle of attack. Alternatively, the turbine may employ active stall control, which achieves power limitation above rated wind speed by pitching the blades into stall, in the opposite direction of that used in active pitch control.

The controllers, functions and logic elements described herein may be implemented as hardware components or software executing on one or more processors located at the wind turbine controller, the PPC or a remote location, or a combination thereof.

### - TURBINE MAXIMUM POWER LEVEL

The wind turbine type maximum power level is the maximum power level that a given type of wind turbine is allowed to produce when the wind is suitably high if it is to be operated at the limit of the design loads of the components of the wind turbine. The wind turbine type maximum power level effectively applies for the design lifetime of the turbine. Therefore, the wind turbine type maximum power level will typically be higher than the nominal name-plate rating for that type of wind turbine as the nominal name-plate rating is typically a more conservative value.

A type of wind turbine may be understood as a wind turbine with the same electrical system, mechanical system, generator, gearbox, turbine blade, turbine blade length, hub height, and so on. The type of wind turbine therefore does not necessarily correspond to the Electromechnical Commission (IEC) class of wind turbine as different types of turbine may be in the same IEC class of wind turbine where each type of wind turbine may have a different wind turbine type maximum power level based on the design of and components in the wind turbine.

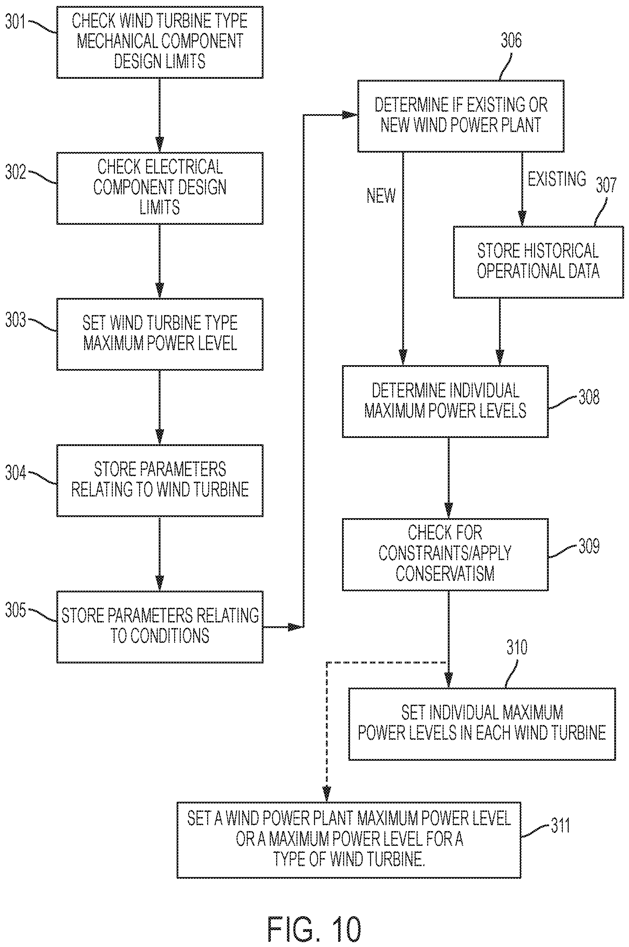

Figure 10 shows an example of how maximum power levels for wind turbines may be set. The maximum power level for a given turbine type is constrained by the ultimate/extreme load limits of the wind turbine mechanical components, and the design limits of the electrical components, since the maximum power cannot be safely increased beyond a level that would cause the turbine to experience load values or electrical loads higher than its ultimate design load limits. The maximum power level 303 for a given type or model of wind turbine may be determined in any suitable manner. This may include, for example: simulating a load spectrum for a range of power levels to determine the ultimate mechanical loads on the type of wind turbine for each of the two or more test power levels; comparing the determined load for each power level with a design load for the type of wind turbine; and determining the wind turbine type maximum power level for the type of wind turbine as the maximum power level at which the determined ultimate load does not exceed the design load for the type of wind turbine.

The design limitations for the electrical components in the type of wind turbine may be considered or evaluated for previously determined wind turbine mechanical component design limits. The main electrical components are considered to ensure that the determined wind turbine type power level for the mechanical component design limits does not exceed the design limitations of the main electrical components of the type of wind turbine being analysed. The main electrical components may include, for example, the generator, converter, transformer, internal cables, contactors, circuit breakers, or any other electrical component in the type of wind turbine. Based on simulations and/or calculations it is then determined whether the main electrical components can operate at the previously determined wind turbine type maximum power level for the mechanical component design limits. For example, operation at the mechanical components' design limit power level may cause a temperature at one or more electrical contactors inside the wind turbine to increase and so reduce the electrical current carrying capability of the electrical contactor, which is determined by the size of the contactor and the conditions for thermal dissipation in the cabinet within which it is placed.

If it is determined or identified that the main electrical components can operate at the previously determined mechanical component design limits, for the given type of wind turbine, then the wind turbine type maximum power level is set or recorded as the maximum power level for the given type of wind turbine in accordance with the mechanical component design limits. If it does not, then further investigation or action can be taken to arrive at a turbine type maximum power level that accommodates both the mechanical and electrical components.

The maximum power level may be further refined for each individual turbine, being calculated based on the fatigue load values for each turbine, based on one or more of the conditions faced by each of the wind turbines at their specific location or position in the wind power plant, with individual maximum power levels being determined for each turbine in a given site. The maximum power level for a particular turbine micro-site may therefore be determined, where the term "micro-site" refers to the specific location of an individual wind turbine, whereas the term "site" refers to a more general location, such as the location of a wind farm. The individual maximum power level 308 is set so that the rate of consumption of fatigue life by the turbine, or by individual turbine components, corresponds to, or exceeds, the particular target lifetime.

Where a turbine is limited to a maximum power level that is below the level dictated by ultimate mechanical loads and electrical limits, i.e. where the maximum power level is dictated by fatigue loads, then the maximum power level for the particular turbine at that micro-site can be safely exceeded up to the maximum power level for that type of turbine, and the only effect is on the rate of accumulation of fatigue damage. When the over-ride signal is received the maximum power level for each turbine may then be set to the turbine type maximum power level by the controller. For example, a turbine type may have a maximum power level of 1800 kW. The maximum power level on a particular micro-site for that turbine type may be 1760 kW. The over-ride function then permits operation to 1800 kW, when otherwise the turbine would never exceed 1760 kW. The over-ride function described in relation to embodiments of the invention may therefore permit or cause over-rating up to the turbine type maximum power level.

Embodiments of the invention may also provide a modified wind turbine that has one or more components designed to have increased ultimate load limits and/or electrical load limits compared to a given wind turbine type. By strengthening the design of the turbine against ultimate loads/electrical power increases the maximum power level can be increased beyond the turbine type maximum power, allowing an increased short-term maximum power level to enhance the power boost provided by over-riding the over-rating control algorithm. A typical turbine design may support an increase in power level of 10% from the individual turbine maximum power level for a particular microsite, for example. In contrast, by providing one or more modified components designed to withstand higher ultimate/extreme loads the increase in power may be significantly higher.

The turbine components may be designed to withstand higher extreme loads by including additional material, such as cast iron, on the component castings. This could be applied, for example, to the nacelle bed plate and/or hub castings. Other components such as the blades and tower may be reinforced or braced at certain locations, particularly at the regions where extreme loads are experienced. Specific electrical components may be changed for larger versions, for example converter components, or contactors or circuit breakers on the power cables.

### - LIFETIME USAGE ESTIMATORS

Embodiments of the invention, as described above, make use of Lifetime Usage Estimators (LUEs). The lifetime usage estimators will now be described in more detail. The algorithm required to estimate lifetime usage will vary from component to component and the LUEs may comprise a library of LUE algorithms including some or all of the following: load duration, load revolution distribution, rainflow counting, stress cycle damage, temperature cycle damage, generator thermal reaction rate, transformer thermal reaction rate and bearing wear. Additionally other algorithms may be used. As mentioned above, lifetime usage estimation may only be used for selected key components and the use of a library of algorithms enables a new component to be selected for LUE and the suitable algorithm selected from the library and specific parameters set for that component part.

In one embodiment, LUEs are implemented for all major components of the turbine including blades; pitch bearings; pitch actuators or drives; hub; main shaft; main bearing housing; main bearings; gearbox bearings; gear teeth; generator; generator bearings; converter; generator terminal-box cable; yaw drives; yaw bearing; tower; offshore support structure if present; foundation; and transformer windings. Alternatively a selection of one or more of these LUEs may be made.

As examples of the appropriate algorithms, rainflow counting may be used in the blade structure, blade bolts, pitch system, main shaft system, converter, yaw system, tower and foundation estimators. In the blade structure algorithm, the rainflow count is applied to the blade root bending flapwise and edgewise moment to identify the stress cycle range and mean values and the output is sent to the stress cycle damage algorithm. For the blade bolts, the rainflow count is applied to the bolt bending moment to identify stress cycle range and mean values and the output sent to the stress cycle damage algorithm. In the pitch system, main shaft system, tower and foundation estimators the rainflow counting algorithm is also applied to identify the stress cycle range and mean values and the output sent to the stress cycle damage algorithm. The parameters to which the rainflow algorithm is applied may include:
- Pitch system - pitch force;
- Main shaft system - main shaft torque;
- Tower - tower stress;
- Foundation - foundation stress.

In the yaw system the rainflow algorithm is applied to the tower top torsion to identify the load duration and this output is sent to the stress cycle damage algorithm. In the converter, generator power and RPM is used to infer the temperature and rainflow counting is used on this temperature to identify the temperature cycle and mean values.

Lifetime usage in the blade bearings may be monitored either by inputting blade flapwise load and pitch velocity as inputs to the load duration algorithm or to a bearing wear algorithm. For the gearbox, the load revolution duration is applied to the main shaft torque to calculate the lifetime used. For the generator, generator RPM is used to infer generator temperature which is used as an input to the thermal reaction rate generator algorithm. For the transformer, the transformer temperature is inferred from the power and ambient temperature to provide an input to the transformer thermal reaction rate algorithm.

Where possible it is preferred to use existing sensors to provide the inputs on which the algorithms operate. Thus, for example, it is common for wind turbines to measure directly the blade root bending edgewise and flapwise moment required for the blade structure, blade bearing and blade bolts estimators. For the pitch system, the pressure in a first chamber of the cylinder may be measured and the pressure in a second chamber inferred, enabling pitch force to be calculated. These are examples only and other parameters required as inputs may be measured directly or inferred from other available sensor outputs. For some parameters, it may be advantageous to use additional sensors if a value cannot be inferred with sufficient accuracy.

The algorithms used for the various types of fatigue estimation are known and may be found in the following standards and texts:
Load Revolution Distribution and Load Duration:
   Guidelines for the Certification of Wind Turbines, Germainischer Lloyd, Section 7.4.3.2 Fatigue Loads
Rainflow:
   IEC 61400-1 'Wind turbines - Part 1: Design requirements, Annex G
Miners Summation:
   IEC 61400-1 'Wind turbines - Part 1: Design requirements, Annex G
Power Law (Chemical decay):
   IEC 60076-12 'Power Transformers - Part 12: Loading guide for dry-type power transformers', Section 5.

## Claims

1. A method of controlling a wind turbine, the method comprising:
over-rating the wind turbine above the wind turbine's rated power in response to a control signal (801);
applying an over-rating control algorithm (803-806) that restricts the amount of additional power produced by over-rating the wind turbine, due to the control signal, based upon one or more turbine parameters including a first turbine maximum power level parameter and a second turbine maximum power level,
the first turbine maximum power level being the individual maximum power level for the turbine at its respective micro-site;
the second turbine maximum power level being the turbine type maximum power level for the given turbine type constrained by the ultimate load limits of the wind turbine mechanical components, and the design limits of the electrical components,
and wherein the over-rating control algorithm restricts power output to a value at or below the first maximum power level,
**characterised in that** the method further comprises:
receiving (802) an over-ride signal; and
in response to the over-ride signal, over-riding (807) the over-rating control algorithm to temporarily increase the amount of power output by the wind turbine for a period of time, by applying the second maximum power level, that is greater than the first maximum power level,
wherein the over-ride signal is generated in response to the power output of the wind turbine falling below a target value, or in response to an action taken by a grid operator, or in response to the detection of an unexpected event.

2. The method according to claim 1, wherein the one or more turbine parameters are parameters indicative of the fatigue life consumed by the one or more turbine components.

3. The method according to claim 2, wherein the over-rating control algorithm determines whether the fatigue life consumed by the one or more turbine components exceeds respective threshold values and, if so, reduces the power output of the wind turbine to limit the rate of consumption of fatigue life by the one or more turbine components.

4. The method according to any preceding claim, further comprising, after the period of time during which the over-rating control algorithm has been over-ridden:
determining measures of the fatigue life consumed by one or more turbine components;
determining whether the fatigue life consumed by the one or more components exceeds respective threshold values and, if so, controlling the power output of the wind turbine to limit the total fatigue life consumed by the one or more turbine components.

5. The method according to claim 4, wherein controlling the power output of the wind turbine to limit the total fatigue life consumed by the one or more turbine components comprises:
reducing or cancelling over-rating for a period of time to reduce the rate of consumption of fatigue life of the one or more components.

6. The method according to claim 4, wherein controlling the power output of the wind turbine to limit the total fatigue life consumed by the one or more turbine components comprises:
de-rating the turbine to produce power below rated power for a period of time to reduce the rate of consumption of fatigue life of the one or more components.

7. The method according to claim 4, 5 or 6, further comprising:
reducing the rate of consumption of fatigue life until the value for the total fatigue life consumed by at least one of the one or more of the components passes a respective threshold derived from a long-term expected trend of fatigue damage accumulation.

8. The method according to any of claims 3 to 7, wherein determining measures of the fatigue life consumed by one or more turbine components comprises:
obtaining one or more signals, or values of variables, that indicate the fatigue lifetime of one or more of the wind turbine's components from turbine sensors; and
applying one or more lifetime usage estimator algorithms to the signals or values to determine measures of the fatigue life consumed by each of the turbine components.

9. The method of any preceding claim, further comprising:
receiving a value for a minimum power output for the wind turbine or a wind turbine power plant for a power output period;
periodically monitoring the wind turbine or wind turbine power plant power output;
determining when the power output falls below the value for minimum power output; and
generating the over-ride signal when the power output falls below the value for minimum power output.

10. The method of any preceding claim, further comprising applying an operational constraint by:
monitoring one or more turbine component parameters; and
cancelling or reducing the amount of power above rated power produced by the over-rating control algorithm if one or more of the turbine component parameters move beyond respective threshold values related to respective values.

11. The method of claim 10, wherein:
the turbine is configured to shut down if one or more of the turbine component parameters reach their respective values.

12. A controller for a wind turbine, the controller being configured to carry out the method of any of claims 1 to 11.

13. A controller for a wind power plant, the controller being configured to, for each turbine in the wind power plant, carry out the method of any of claims 1 to 11.

14. A computer program that when executed on a processor of a control system causes it to carry out the method of any of claims 1 to 11.

15. A wind turbine comprising a controller according to claim 13.

16. A wind power plant comprising one or more controllers according to claim 13, or one or more wind turbines according to claim 15.

## Patentansprüche

1. Verfahren zur Steuerung einer Windkraftanlage, wobei das Verfahren umfasst:
Überbewerten der Windkraftanlage oberhalb der Nennleistung der Windkraftanlage in Reaktion auf ein Steuersignal (801);
Anwenden eines Überbewertungssteuerungsalgorithmus (803-806), der die Menge an zusätzlicher Leistung, die durch Überbewertung der Windkraftanlage erzeugt wird, aufgrund des Steuersignals begrenzt, basierend auf einem oder mehreren Turbinenparametern, die einen ersten maximalen Turbinen-Höchstleistungspegelparameter und einen zweiten Turbinen-Höchstleistungspegelparameter einschließen,
wobei der erste Turbinen-Höchstleistungspegelparameter der individuelle maximale Höchstleistungspegel für die Turbine an ihrem jeweiligen Mikrostandort ist;
wobei der zweite Turbinen-Höchstleistungspegelparameter der Höchstleistungspegel des Turbinentyps für den gegebenen Turbinentyp ist, der durch die ultimativen Lastgrenzen der mechanischen Komponenten der Windkraftanlage und die Konstruktionsgrenzen der elektrischen Komponenten begrenzt ist,
und wobei der Überbewertungssteuerungsalgorithmus die Ausgangsleistung auf einen Wert bei oder unter dem ersten Höchstleistungspegel einschränkt, **dadurch gekennzeichnet, dass** das Verfahren weiter umfasst:
Empfangen (802) eines Überbewertungssignals; und
in Reaktion auf das Überbewertungssignal, Überbewerten (807) des Überbewertungssteuerungsalgorithmus, um die Menge der von der Windkraftanlage abgegebenen Leistung für eine Zeitspanne vorübergehend zu erhöhen, indem der zweite Höchstleistungspegel aufgebracht wird, der größer als der erste Höchstleistungspegel ist,
wobei das Überbewertungssignal in Reaktion darauf erzeugt wird, dass die Ausgangsleistung der Windkraftanlage unter einen Zielwert fällt, oder in Reaktion auf eine Aktion eines Netzbetreibers, oder in Reaktion auf das Erkennen eines unerwarteten Ereignisses.

2. Verfahren nach Anspruch 1, wobei es sich bei dem einen oder den mehreren Turbinenparametern um Parameter handelt, die die von der einen oder den mehreren Turbinenkomponenten verbrauchte Ermüdungslebensdauer anzeigen.

3. Verfahren nach Anspruch 2, wobei der Überbewertungssteuerungsalgorithmus bestimmt, ob die von der einen oder den mehreren Turbinenkomponenten verbrauchte Ermüdungslebensdauer die jeweiligen Schwellenwerte überschreitet, und, falls dies der Fall ist, die Ausgangsleistung der Windkraftanlage reduziert, um die Rate des Verbrauchs der Ermüdungslebensdauer durch die eine oder die mehreren Turbinenkomponenten zu begrenzen.

4. Verfahren nach einem der vorstehenden Ansprüche, weiter umfassend nach der Zeitspanne, in der der Überbewertungssteuerungsalgorithmus überbewertet wurde:
Bestimmen von Maßen für die Ermüdungslebensdauer, die von einer oder mehreren Turbinenkomponenten verbraucht wird;
Bestimmen, ob die von der einen oder den mehreren Komponenten verbrauchte Ermüdungslebensdauer jeweilige Schwellenwerte überschreitet, und, wenn dies der Fall ist, Steuern der Ausgangsleistung der Windkraftanlage, um die von der einen oder den mehreren Turbinenkomponenten verbrauchte Gesamtermüdungslebensdauer zu begrenzen.

5. Verfahren nach Anspruch 4, wobei das Steuern der Ausgangsleistung der Windkraftanlage zur Begrenzung der Gesamtermüdungslebensdauer, die durch die eine oder mehreren Turbinenkomponenten verbraucht wird, umfasst:
Reduzieren oder Aufheben der Überbewertung für eine Zeitspanne, um die Rate des Verbrauchs der Ermüdungslebensdauer der einen oder mehreren Komponenten zu reduzieren.

6. Verfahren nach Anspruch 4, wobei das Steuern der Ausgangsleistung der Windkraftanlage zur Begrenzung der Gesamtermüdungslebensdauer, die durch die eine oder mehreren Turbinenkomponenten verbraucht wird, umfasst:
Drosseln der Turbine, um für eine Zeitspanne eine Leistung unterhalb der Nennleistung zu erzeugen, um die Rate des Verbrauchs der Ermüdungslebensdauer der einen oder mehreren Komponenten zu reduzieren.

7. Verfahren nach Anspruch 4, 5 oder 6, weiter umfassend:
Reduzieren der Rate des Verbrauchs der Ermüdungslebensdauer, bis der Wert für die gesamte verbrauchte Ermüdungslebensdauer von mindestens einer der einen oder mehreren der Komponenten einen jeweiligen Schwellenwert durchläuft, der aus einem langfristig erwarteten Trend der Akkumulation von Ermüdungsschäden abgeleitet wird.

8. Verfahren nach einem der Ansprüche 3 bis 7, wobei das Bestimmen von Maßen für die von einer oder mehreren Turbinenkomponenten verbrauchte Ermüdungslebensdauer umfasst:
Erhalten eines oder mehrerer Signale oder Werte von Variablen, die die Ermüdungslebensdauer einer oder mehrerer Komponenten der Windkraftanlage von Turbinensensoren anzeigen; und
Anwenden eines oder mehrerer Algorithmen zur Lebensdauernutzungsabschätzung auf die Signale oder Werte, um Maße für die Ermüdungslebensdauer zu bestimmen, die von jeder der Turbinenkomponenten verbraucht wird.

9. Verfahren nach einem der vorstehenden Ansprüche, weiter umfassend:
Empfangen eines Wertes für eine Mindestausgangsleistung für die Windkraftanlage oder ein Windkraftanlagenpark für eine Ausgangsleistungsperiode;
periodisches Überwachen der Ausgangsleistung der Windkraftanlage oder des Windkraftanlagenparks;
Bestimmen, wann die Ausgangsleistung unter den Wert für die Mindestausgangsleistung fällt; und
Erzeugen des Überbewertungssignals, wenn die Ausgangsleistung unter den Wert für die Mindestausgangsleistung fällt.

10. Verfahren nach einem der vorstehenden Ansprüche, weiter umfassend das Anwenden einer Betriebsbeschränkung durch:
Überwachen eines oder mehrerer Turbinenkomponentenparameter; und
Aufheben oder Reduzieren der über der Nennleistung liegenden Leistungsmenge, die durch den Überbewertungssteuerungsalgorithmus erzeugt wird, wenn einer oder mehrere der Turbinenkomponentenparameter über die jeweiligen Schwellenwerte in Bezug auf die jeweiligen Werte hinausgehen.

11. Verfahren nach Anspruch 10, wobei:
die Turbine so konfiguriert ist, dass sie abgeschaltet wird, wenn einer oder mehrere der Turbinenkomponentenparameter ihre jeweiligen Werte erreichen.

12. Steuervorrichtung für eine Windkraftanlage, wobei die Steuervorrichtung konfiguriert ist, um das Verfahren nach einem der Ansprüche 1 bis 11 auszuführen.

13. Steuervorrichtung für einen Windpark, wobei die Steuervorrichtung konfiguriert ist, um für jede Turbine in dem Windpark das Verfahren nach einem der Ansprüche 1 bis 11 auszuführen.

14. Computersystem, das, wenn es auf einem Prozessor eines Steuersystem ausgeführt wird, diesen veranlasst, das Verfahren nach einem der Ansprüche 1 bis 11 auszuführen.

15. Windkraftanlage, umfassend eine Steuervorrichtung nach Anspruch 13.

16. Windpark, umfassend eine oder mehrere Steuervorrichtungen nach Anspruch 13, oder eine oder mehrere Windkraftanlagen nach Anspruch 15.

## Revendications

1. Procédé de commande d'une éolienne, le procédé comprenant :
un surrégime de l'éolienne au-dessus de la puissance nominale de l'éolienne en réponse à un signal de commande (801) ;
l'application d'un algorithme de commande de surrégime (803-806) qui restreint la quantité de puissance supplémentaire produite par un surrégime de l'éolienne, en raison du signal de commande, sur la base d'un ou plusieurs paramètres de turbine incluant un premier paramètre de niveau de puissance maximum de turbine et un second niveau de puissance maximum de turbine,
le premier niveau de puissance maximum de turbine étant le niveau de puissance maximum individuel pour la turbine au niveau de son micro-site correspondant ;
le second niveau de puissance maximum de turbine étant le niveau de puissance maximum de type de turbine pour le type de turbine donné limité par les limites de charge ultime des composants mécaniques de l'éolienne et les limites de conception des composants électriques,
et dans lequel l'algorithme de commande de surrégime restreint la sortie de puissance à une valeur égale ou inférieure au premier niveau de puissance maximum, **caractérisé en ce que** le procédé comprend en outre :
la réception (802) d'un signal de priorité ; et
en réponse au signal de priorité, la prise de contrôle (807) de l'algorithme de commande de surrégime pour augmenter temporairement la quantité de sortie de puissance de l'éolienne pendant une durée, en appliquant le second niveau de puissance maximum, qui est supérieur au premier niveau de puissance maximum,
dans lequel le signal de priorité est généré en réponse à la sortie de puissance de l'éolienne qui chute en dessous d'une valeur cible ou en réponse à une action prise par un opérateur de réseau ou en réponse à la détection d'un événement inattendu.

2. Procédé selon la revendication 1, dans lequel le un ou plusieurs paramètres de turbine sont des paramètres indicatifs de la vie en fatigue consommée par le un ou plusieurs composants de turbine.

3. Procédé selon la revendication 2, dans lequel l'algorithme de commande de surrégime détermine si la vie en fatigue consommée par le un ou plusieurs composants de turbine dépasse les valeurs de seuil correspondantes et, le cas échéant, réduit la sortie de puissance de l'éolienne pour limiter le taux de consommation de la vie en fatigue par le un ou plusieurs composants de turbine.

4. Procédé selon l'une quelconque des revendications précédentes, comprenant en outre, après la durée pendant laquelle l'algorithme de commande de surrégime a été contrôlé :
la détermination des mesures de la durée de vie en fatigue consommée par un ou plusieurs composants de turbine ;
la détermination si la vie en fatigue consommée par le un ou plusieurs composants dépasse les valeurs de seuil correspondantes et, le cas échéant, la commande de la sortie de puissance de l'éolienne pour limiter la vie en fatigue totale consommée par le un ou plusieurs composants de turbine.

5. Procédé selon la revendication 4, dans lequel la commande de la sortie de puissance de l'éolienne pour limiter la vie en fatigue totale consommée par le un ou plusieurs composants de turbine comprend :
la réduction ou l'annulation du surrégime pendant une certaine durée pour réduire le taux de consommation de la vie en fatigue du un ou plusieurs composants.

6. Procédé selon la revendication 4, dans lequel la commande de la sortie de puissance de l'éolienne pour limiter la vie en fatigue totale consommée par le un ou plusieurs composants de turbine comprend :
le déclassement de la turbine pour produire une puissance inférieure à la puissance nominale pendant une certaine durée afin de réduire le taux de consommation de la vie en fatigue du un ou plusieurs composants.

7. Procédé selon la revendication 4, 5 ou 6, comprenant en outre :
la réduction du taux de consommation de la vie en fatigue jusqu'à ce que la valeur pour la vie en fatigue totale consommée par au moins l'un des un ou plusieurs composants dépasse un seuil respectif dérivé d'une tendance attendue à long terme d'accumulation de dommages par fatigue.

8. Procédé selon l'une quelconque des revendications 3 à 7, dans lequel la détermination des mesures de la vie en fatigue consommée par un ou plusieurs composants de turbine comprend :
l'obtention d'un ou plusieurs signaux, ou d'une ou plusieurs valeurs de variables, qui indiquent la durée de vie en fatigue d'un ou plusieurs des composants de l'éolienne à partir de capteurs de turbine ; et
l'application d'un ou plusieurs algorithmes d'estimation d'utilisation de durée de vie aux signaux ou valeurs pour déterminer les mesures de la vie en fatigue consommée par chacun des composants de turbine.

9. Procédé selon l'une quelconque des revendications précédentes, comprenant en outre :
la réception d'une valeur pour une sortie de puissance minimale pour l'éolienne ou une centrale éolienne pendant une période de sortie de puissance ;
la surveillance périodique de la sortie de puissance de l'éolienne ou de la centrale éolienne ;
la détermination de la chute de sortie de puissance en dessous de la valeur de sortie de puissance minimale ; et
la génération du signal de priorité lorsque la sortie de puissance chute en dessous de la valeur de la sortie de puissance minimale.

10. Procédé selon l'une quelconque des revendications précédentes, comprenant en outre l'application d'une contrainte opérationnelle par :
surveillance d'un ou plusieurs paramètres des composants de turbine ; et
annulation ou réduction de la quantité de puissance supérieure à la puissance nominale produite par l'algorithme de commande de surrégime si un ou plusieurs des paramètres des composants de turbine dépassent des valeurs seuils correspondantes liées à des valeurs correspondantes.

11. Procédé selon la revendication 10, dans lequel :
la turbine est configurée pour s'arrêter si un ou plusieurs des paramètres de composants de turbine atteignent leurs valeurs correspondantes.

12. Dispositif de commande pour une éolienne, le dispositif de commande étant configuré pour mettre en œuvre le procédé selon l'une quelconque des revendications 1 à 11.

13. Dispositif de commande pour une centrale éolienne, le dispositif de commande étant configuré pour, pour chaque turbine de la centrale éolienne, mettre en œuvre le procédé selon l'une quelconque des revendications 1 à 11.

14. Programme informatique qui, lorsqu'il est exécuté sur un processeur d'un système de commande, provoque la mise en œuvre du procédé selon l'une quelconque des revendications 1 à 11.

15. Éolienne comprenant un dispositif de commande selon la revendication 13.

16. Centrale éolienne comprenant un ou plusieurs dispositifs de commande selon la revendication 13, ou une ou plusieurs éoliennes selon la revendication 15.
